# EUROPÄISCHE PATENTSCHRIFT

(11) **EP 3 106 279 B1**
(45) Veröffentlichungstag und Bekanntmachung des Hinweises auf die Patenterteilung: **21.06.2017**
(21) Anmeldenummer: 16001237.3
(22) Anmeldetag: 01.06.2016
(51) Int. Cl.: B29B 17/02, B08B 3/10, B08B 9/08

(54) **VORRICHTUNGEN UND VERFAHREN ZUM BEHANDELN VON INSBESONDERE KLEINSTÜCKIGEM SCHÜTTGUT**
DEVICES AND METHOD FOR PROCESSING ESPECIALLY OF SMALL SIZED BULK MATERIAL
DISPOSITIFS ET PROCÉDÉ POUR LE TRAITEMENT D'UN PRODUIT EN VRAC, EN PARTICULIER EN PETITS MORCEAUX

(30) Priorität: 20.06.2015 DE 102015007912
(43) Veröffentlichungstag der Anmeldung: 21.12.2016
(73) Patentinhaber: Kleinen, Karl-Heinz, 47906 Kempen (DE); Buzga, Heinrich, 41516 Grevenbroich (DE)
(72) Erfinder: Kleinen, Karl-Heinz, 47906 Kempen (DE); Buzga, Heinrich, 41516 Grevenbroich (DE)
(74) Vertreter: Dammertz, Ulrich

(56) Entgegenhaltungen:
- JP-A- S54 139 684
- JP-A- 2000 043 044
- JP-A- 2002 355 576
- JP-A- 2010 099 910
- US-A1- 2014 318 576

## Beschreibung

Die Erfindung betrifft eine Vorrichtung zum Behandeln von insbesondere kleinstückigem Schüttgut nach dem Oberbegriff von Anspruch 1, und ein entsprechendes Verfahren nach dem Oberbegriff von Anspruch 9.

Auf dem Gebiet des Material-Recyclings ist es insbesondere bei der Rückgewinnung von Kunststoffen gewünscht, möglichst reine Wertstoff-Fraktionen zu erhalten. In diesem Zusammenhang wird angestrebt, Verschmutzungen oder sonstige Fremdstoffe von den Kunststoffen zu entfernen, um nachfolgende Stufen des Recycling-Prozesses zu optimieren.

Zum Waschen bzw. Reinigen von Recycling-Kunststoffen ist die Verwendung von Flüssigkeiten bekannt, z.B. von Wasser oder Natronlauge. Eine solche Reinigung kann entweder in einem kontinuierlichen Prozess oder diskontinuierlich erfolgen. Hierbei werden Kunststoffe bzw. Kunststoffteile in der Regel mit einer großen Menge an Flüssigkeit behandelt, um die gewünschte Reinigung der Kunststoffe zu erzielen. Nachteilig hierbei ist der hohe Verbrauch an Flüssigkeit und eine ggf. nicht optimale Reinigungsintensität.

In der Verpackungsindustrie ist bekannt, Kunststoffbehälter mit Etiketten zu versehen, weil ein direktes Bedrucken von solchen Kunststoffbehältern technisch problematisch ist. Somit weisen Kunststoffbehälter in der Praxis häufig Etiketten auf, die entweder kraftschlüssig oder formschlüssig mit der Oberfläche von Kunststoffbehältern verbunden sind. Beim Recycling von solchen Kunststoffbehältern besteht somit ein Bedarf dahingehend, die Etiketten davon zu entfernen.

Aus DE 10 2010 032 260 A1 sind ein Verfahren und eine Vorrichtung zur Vorreinigung von Teilen aus Kunststoff bekannt, wobei anhaftende Fremdkörper von den zu recycelnden Kunststoffteilen durch mechanische Beanspruchung entfernt werden. Zu diesem Zweck werden Kunststoffteile in eine Gehäusekammer eingegeben, in der ein Rotor mit Schneidwerkzeugen rotiert. Beim Drehen des Rotors gelangen die daran befestigten Werkzeuge in Kontakt mit den zu recycelnden Kunststoffteilen, so dass daran anhaftende Fremdkörper entsprechend entfernt bzw. abgeschlagen werden.

Aus DE 103 08 500 A1 sind ein Verfahren und eine Vorrichtung zur trockenmechanischen Aufbereitung von Kunststoff-Hohlkörpern bekannt, die mit Etiketten versehen sind. Solche Kunststoff-Hohlkörper werden entlang einer Transportstrecke axialen, radialen und tangentialen Beschleunigungs- und Prallkräften ausgesetzt, wobei die Kunststoff-Hohlkörper während ihrer Bewegung entlang der Transportstrecke oberflächlich angerissen werden, wodurch die daran anhaftenden Etiketten sich zumindest teilweise lösen. Eine Aufbereitung von Kunststoff-Hohlkörpern gemäß DE 103 08 500 A1 ist allein trockenmechanisch vorgesehen, so dass eine Reinigungsflüssigkeit oder dergleichen nicht zum Einsatz kommt.

Der vorstehend genannte Stand der Technik unterliegt dem Nachteil einer vergleichsweise aufwändigen Konstruktion von rotierenden Messervorrichtungen oder dergleichen, mit denen die zu recyclierenden Kunststoffteile zur Ablösung von daran anhaftenden Etiketten mechanisch bearbeitet werden.

Aus JP 2002 355 576 A sind eine gattungsgemäße Vorrichtung mit den im Oberbegriff von Anspruch 1 angegebenen Merkmalen, und ein gattungsgemäßes Verfahren mit den im Oberbegriff von Anspruch 9 angegebenen Merkmalen bekannt.

Der Erfindung liegt die Aufgabe zugrunde, ein Behandeln von Schüttgut und insbesondere ein Reinigen von Kunststoffteilen für einen nachfolgenden Recycling-Prozess mit einfachen und preiswerten Mitteln zu optimieren.

Diese Aufgabe wird durch eine Vorrichtung mit den Merkmalen von Anspruch 1, durch eine Vorrichtung mit den Merkmalen von Anspruch 6, und durch ein Verfahren mit den Merkmalen von Anspruch 9 gelöst. Vorteilhafte Weiterbildungen sind in den abhängigen Ansprüchen definiert.

Die Erfindung sieht ein Verfahren zum Behandeln von insbesondere kleinstückigem Schüttgut innerhalb eines länglichen Behälters vor, in dem eine Transportstrecke zur Förderung des Schüttgutes ausgebildet ist. Der Behälter ist ortsfest aufgestellt, wobei seine Längsachse horizontal angeordnet ist. In dem Behälter sind entlang seiner Längsachse eine Mehrzahl von aneinander angrenzenden und miteinander verbundenen Kammern ausgebildet, wobei die Kammern bezüglich eines Durchlasses zu einer jeweils daran angrenzenden Kammer alternierend ausgebildet sind und dadurch das Schüttgut entlang der Transportstrecke mäanderförmig gefördert wird. Das Schüttgut wird durch den Behälter entlang der Transportstrecke zumindest in vertikaler Ebene mäanderförmig gefördert, so dass während des mäanderförmigen Förderns der Schüttgutes entlang der Transportstrecke, nämlich alternierend in jeder zweiten Kammer innerhalb des Behälters das Schüttgut von unten nach oben gefördert wird und dabei Partikel des Schüttgutes entlang der Transportstrecke relativ zu benachbarten Partikeln in Bewegung versetzt werden. Durch diese Bewegung entsteht zwischen den Partikeln des Schüttgutes Reibung bzw. Friktion, wodurch für das Schüttgut ein Mischen und/oder ein wirkungsvolles Reinigen der Oberfläche der Schüttgut-Partikel erzielt wird.

In gleicher Weise sieht die Erfindung eine Vorrichtung zum Behandeln von insbesondere kleinstückigem Schüttgut vor, die einen länglichen Behälter mit einer Einfüllöffnung und einer Austrittsöffnung umfasst, wobei zwischen der Einfüllöffnung und der Austrittsöffnung innerhalb des Behälters eine Transportstrecke zur Förderung des Schüttgutes ausgebildet ist. In dem Behälter ist entlang von dessen Längsachse zumindest ein Rotor angeordnet, an dem eine Mehrzahl von Paddeln und/oder Schaufeln angebracht sind, nämlich zu dem Zweck, das Schüttgut in dem Behälter entlang der Transportstrecke in eine vorbestimmte Richtung zu fördern. In dem Behälter sind entlang seiner Längsachse eine Mehrzahl von aneinander angrenzenden und miteinander verbundenen Kammern ausgebildet, wobei die Kammern bezüglich eines Durchlasses zu jeweils daran angrenzenden Kammern alternierend ausgebildet sind und dadurch die Transportstrecke zur Förderung des Schüttgutes mäanderförmig, zumindest in vertikaler Ebene, verläuft. Der Behälter ist mit seiner Längsachse horizontal angeordnet, wobei die Transportstrecke zur Förderung des Schüttgutes zumindest in vertikaler Ebene mäanderförmig verläuft.

Ein Verfahren und eine Vorrichtung nach der vorliegenden Erfindung kommen zur Behandlung von kleinstückigem Schüttgut zum Einsatz, bei dem es sich insbesondere um kleinstückiges Material in Form von zerkleinerten Kunststoffabfällen handelt. Die Erfindung stellt nun darauf ab, solch kleinstückiges Schüttgut geeignet zu behandeln und dabei vorzugsweise eine effiziente Reinigung der kleinstückigen Partikel dieses Schüttgutes zu erzielen. In diesem Zusammenhang darf darauf hingewiesen werden, dass es sich bei dem erfindungsgemäßen Verfahren um einen kontinuierlichen Prozess handelt, und in gleicher Weise die erfindungsgemäße Vorrichtung für eine kontinuierliche Behandlung des Schüttgutes ausgelegt ist.

Der Erfindung liegt die wesentliche Erkenntnis zugrunde, dass das Schüttgut innerhalb des Behälters entlang der Transportstrecke mäanderförmig hindurchgefördert wird, zumindest in einer vertikalen Ebene bzw. vertikalen Ebenen. Durch eine solche Ausgestaltung der Transportstrecke ist sichergestellt, dass es zwischen den Partikeln des Schüttgutes zu einer ausreichend hohen Friktionsbildung kommt, wodurch das Schüttgut entweder intensiv gemischt und/oder dabei gleichzeitig auch intensiv gereinigt wird. Unter Reinigung wird im Sinne der vorliegenden Erfindung verstanden, dass Störstoffe, z.B. in Form von Etiketten oder dergleichen, die an einer Oberfläche der Schüttgut-Partikel anhaften können, durch die zwischen den Partikeln auftretende Friktionsbildung geeignet entfernt werden. Zur Durchführung des Verfahrens und für die Vorrichtung nach der vorliegenden Erfindung ist es zweckmäßig, wenn in dem Behälter entlang seiner Längsachse eine Mehrzahl von aneinander angrenzenden und miteinander verbundenen Kammern ausgebildet sind, die bezüglich eines Durchlasses zu jeweils daran angrenzenden Kammern alternierend ausgebildet sind: Hierdurch wird nämlich erreicht, dass die Transportstrecke zur Förderung des Schüttgutes mäanderförmig verläuft, vorzugsweise zumindest in einer vertikalen Ebene.

Die vorbestimmte Richtung, in der das Schüttgut innerhalb des Behälters durch den Rotor gefördert wird, weist von der Einfüllöffnung des Behälters in Richtung seiner Austrittsöffnung. Vorzugsweise durchsetzt der Rotor Trennwände, die zwischen den jeweiligen Kammern in dem Behälter vorgesehen sind. Durch den Rotor und die daran angebrachten Paddel/Schaufeln wird erreicht, dass das Schüttgut innerhalb jeder Kammer des Behälters geeignet durchmischt und gleichzeitig in Richtung eines Durchlasses zu einer jeweils stromabwärts gelegenen Kammer des Behälters gefördert wird. Hierbei kommt es wie bereits erläutert zu der Friktionsbildung zwischen den Partikeln des Schüttgutes, um ein gewünschtes Mischen bzw. Reinigen des Schüttgutes zu realisieren.

In vorteilhafter Weiterbildung der Erfindung kann die Drehzahl des Rotors steuerbar veränderlich sein, um einen Durchsatz des Schüttgutes durch den Behälter auf einen vorbestimmten Wert einzustellen. Dies bedeutet, dass durch die Drehzahl des Rotors eingestellt werden kann, welche Zeitdauer eine bestimmte Fraktion des Schüttgutes benötigt, um durch den Behälter von seiner Einfüllöffnung bis zur Austrittsöffnung entlang der Transportstrecke gefördert zu werden. Insoweit ist es möglich, durch eine Veränderung der Drehzahl des Rotors für das Schüttgut eine bestimmte Verweilzeit in Bezug auf eine Förderung durch den Behälter einzustellen.

In vorteilhafter Weiterbildung der Erfindung kann - in gleicher Weise wie mit der vorstehend genannten Änderung der Drehzahl des Rotors - ein veränderlicher Durchsatz des Schüttgutes durch den Behälter hindurch dadurch erreicht werden, dass entweder die Durchlässe von den Kammern in dem Behälter zu den jeweils daran angrenzenden Kammern verändert werden, und/oder dass eine Winkelstellung der Paddel bzw. der Schaufeln bezüglich des Rotors verstellt werden, und/oder dass die Anzahl und Größe von an dem Rotor befestigten Paddeln angepasst wird. Diese möglichen Maßnahmen bzw. Veränderungen können je nach Materialbeschaffenheit des zu behandelnden Schüttgutes getroffen werden.

In vorteilhafter Weiterbildung der Erfindung kann vorgesehen sein, dass in dem Behälter entlang von dessen Längsachse auch mehrere Rotoren angeordnet sind, beispielsweise parallel zueinander. Insbesondere bei Behältern mit einem breiten Innenraum ist durch eine solche Mehrzahl von Rotoren ein gleichmäßiges und umfassendes Umwälzen des Schüttgutes in dem Behälter entlang der Transportstrecke gewährleistet.

In vorteilhafter Weiterbildung der Erfindung kann in den Behälter auch eine Flüssigkeit eingebracht werden. In dieser Weise wird dann das Schüttgut in dem Behälter mit der Flüssigkeit vermischt und entlang der Transportstrecke in dem Behälter zusammen mit der Flüssigkeit gefördert. Bei der Flüssigkeit kann es sich beispielsweise um Wasser oder um Natronlauge handeln. Jedenfalls werden die Art und die Menge dieser Flüssigkeit derart gewählt, dass dadurch ein Ablösen von Verschmutzungen von der Oberfläche der Partikel des Schüttgutes optimiert ist. Die Einwirkung der Flüssigkeit auf Störstoffe und insbesondere Etiketten, die an einer Oberfläche der Partikel des Schüttgutes anhaften können, führt in Verbindung mit der Friktionsbildung zwischen den Oberflächen der Partikel des Schüttgutes vorteilhaft zu einem gewünschten Ablösen eben solcher Störstoffe. Im Vergleich zu herkömmlichen Reinigungsverfahren bzw. -vorrichtungen hat die erfindungsgemäße Verwendung einer Reinigungsflüssigkeit den Vorteil eines geringen Wasserverbrauchs.

In Folge der horizontalen Anordnung der Längsachse des Behälters wird während des mäanderförmigen Förderns des Schüttgutes entlang der Transportstrecke, nämlich alternierend in jeder zweiten Kammer innerhalb des Behälters, das Schüttgut von unten nach oben gefördert, bevor es über den oberen Rand einer Trennwand stromabwärts in eine daran angrenzende nächste Kammer gefördert wird. Bei einem solchen vertikalen Fördern des Schüttgutes in einer Kammer von unten nach oben ist die Friktionsbildung zwischen den Partikeln des Schüttgutes besonders ausgeprägt, wodurch-auch ohne weitere technische Hilfsmittel oder Werkzeuge - eine intensive Reinigung des Schüttguts erreicht wird.

In vorteilhafter Weiterbildung der Erfindung, und insbesondere für den vorstehend genannten Fall, dass der Behälter mit seiner Längsachse horizontal angeordnet ist, kann der Rotor innerhalb des Behälters angrenzend an dessen Bodenbereich angeordnet sein. Hierdurch ist gewährleistet, dass die Schüttgut-Partikel in allen Kammern des Behälters ohne die Ausbildung von "Totwasser-Gebieten" in Richtung der Austrittsöffnung des Behälters gefördert werden, und sich insbesondere auch keine Verstopfungen, z.B. in Form einer Agglomeration von Schüttgut-Partikeln bilden. Insbesondere in den Kammern des Behälters, die mit einer stromabwärts davon gelegenen Kammer durch einen Spalt zwischen dem unteren Rand einer Trennwand und dem Bodenbereich des Behälters verbunden sind, ist von Vorteil, dass ein Paddel und/oder eine Schaufel, die an dem Rotor befestigt sind, eine geeignete Winkelstellung aufweist, derart, dass die Schüttgut-Partikel vollständig in Richtung dieses Spalts gefördert werden. Dies dient einem gewünschten umfassenden Transport des Schüttguts innerhalb des Behälters, ohne dass dabei die Gefahr einer Ausbildung von Verstopfungen oder "Totwasser-Gebieten" besteht.

In vorteilhafter Weiterbildung der Erfindung kann die Behandlung des Schüttgutes innerhalb des Behälters nach dem "Gegenstrom-Prinzip" erfolgen. Hierbei wird in den Behälter angrenzend zu seiner Austrittsöffnung eine Flüssigkeit, vorzugsweise Wasser oder Natronlauge, durch einen Flüssigkeitseinlass eingebracht, wobei diese Flüssigkeit dann innerhalb des Behälters entlang der Transportstrecke und entgegen der Transportrichtung der Schüttgutes in Richtung eines Flüssigkeitsauslasses gelangt, der angrenzend zur Einfüllöffnung im Bodenbereich des Behälters angeordnet ist. Zweckmäßigerweise kann hierbei der Behälter mit seiner Längsachse gegenüber der Horizontalen um einen Winkel geneigt positioniert sein, derart, dass die Austrittsöffnung sich in vertikaler Richtung oberhalb des Flüssigkeitsauslasses befindet. Durch diese Schrägstellung des Behälters wird eine Benetzung des Schüttgutes in allen Kammern des Behälters mittels der durch den Flüssigkeitseinlass eingebrachten Flüssigkeit, und ein anschließender Austrag dieser Flüssigkeit durch den Flüssigkeitsauslass begünstigt.
Nach einer alternativen Ausgestaltung der erfindungsgemäßen Vorrichtung ist der Behälter derart angeordnet, dass seine Längsachse im Wesentlichen vertikal verläuft. Hierdurch wird erreicht, dass der Behälter eine nur geringe Aufstellfläche beansprucht und somit platzsparend ist. Bei einer solchen Anordnung des Behälters ist bevorzugt, dass das Schüttgut vertikal von oben nach unten durch den Behälter gefördert wird. Für einen ausreichenden Transport des Schüttgutes durch die einzelnen Kammern des Behälters entlang der Transportstrecke ist der Einsatz von Druckluft zweckmäßig, durch die das Schüttgut in Richtung der zwischen den jeweils aneinander angrenzenden Kammern ausgebildeten Durchlässe gefördert wird. Zu diesem Zweck können Druckluftdüsen eingesetzt werden, die an den einzelnen Trennwänden zwischen den Kammern angebracht sind und mit ihrer Auslassöffnung in Richtung der entsprechenden Durchlässe zwischen den jeweiligen Kammern ausgerichtet sind.
In vorteilhafter Weiterbildung der Erfindung kann der Innenraum des Behälters auf eine vorbestimmte Temperatur aufgeheizt werden und/oder die Flüssigkeit, die in dem Behälter zusammen mit dem Schüttgut eingebracht wird, kann auf eine vorbestimmte Temperatur aufgeheizt werden. Eine solch erhöhte Temperatur entweder innerhalb des Behälters oder unmittelbar der Flüssigkeit, die mit dem Schüttgut vermischt wird, bewirkt eine weitere Verbesserung in Bezug auf ein Ablösen von Störstoffen und somit für das gewünschte Reinigen des Schüttgutes.
In vorteilhafter Weiterbildung der Erfindung kann oberhalb des Behälters eine motorische Einrichtung angebracht sein, die an einer Stirnseite des Behälters mit dem Rotor über geeignete Antriebsmittel gekoppelt ist.
In vorteilhafter Weiterbildung der Erfindung kann die Behandlung des Schüttgutes innerhalb des Behälters unter Vakuum erfolgen. Dies hat zur Folge, dass aus eventuellen Kapillaren an der Oberfläche der Partikel des Schüttgutes Luft entweicht und Wasser dort eindringt, wodurch ein Ablösen von Verschmutzungen oder dergleichen von der Oberfläche der Schüttgut-Partikel begünstigt wird. Das Erzeugen eines Vakuums in dem Innenraum des Behälters und den darin angeordneten Kammern kann mittels einer Pumpeinrichtung oder dergleichen gewährleistet werden, die in Wechselwirkung mit dem Innenraum des Behälters steht. Weiters kann der Behälter zu diesem Zweck mit einem Deckel oder dergleichen ausgerüstet sein, der den Behälter gegenüber der Umgebung geeignet abdichtet.

Es darf nochmals darauf hingewiesen werden, dass die Erfindung bevorzugt zum Reinigen von Schüttgut in Form von kleinstückigen bzw. zerkleinerten Kunststoffteilen dient. Die Reinigungswirkung in Folge einer Friktion zwischen den einzelnen Partikeln des Schüttgutes kann durch den Einsatz einer Flüssigkeit, beispielsweise Wasser oder Natronlauge, weiter verbessert werden. Alternativ hierzu ist es auch möglich, die Erfindung "trocken", d.h. ohne den Gebrauch einer Flüssigkeit einzusetzen, beispielsweise zu dem Zweck, für ein beliebiges Schüttgut lediglich eine intensive Durchmischung zu erreichen.

Die Erfindung ist nachfolgend anhand bevorzugter Ausführungsformen in der Zeichnung schematisch dargestellt, und wird unter Bezugnahme auf die Zeichnung ausführlich beschrieben.

Es zeigen:
- Fig. 1: eine vereinfachte Perspektivansicht einer Vorrichtung nach einer ersten Ausführungsform,
- Fig. 2: eine Seitenansicht der Vorrichtung von Fig. 1,
- Fig. 3: eine vergrößerte Seitenansicht des Teilbereichs I von Fig. 2,
- Fig. 4: eine modifizierte Darstellung der Seitenansicht gemäß Fig. 2, zur Darstellung einer Transportstrecke für das Schüttgut innerhalb des Behälters der Vorrichtung,
- Fig. 5: eine Draufsicht auf die Vorrichtung von Fig. 1,
- Fig. 6: eine Schnittansicht entlang der Linie B-B von Fig. 5,
- Fig. 7: eine Schnittansicht entlang der Linie C-C von Fig. 5,
- Fig. 8: eine stark vereinfachte Seitenansicht eines Behälters einer Vorrichtung nach einer weiteren Ausführungsform,
- Fig. 9: eine Schnittansicht entlang der Linie D-D von Fig. 5, und
- Fig. 10: eine prinzipiell stark vereinfachte Seitenansicht einer Vorrichtung nach einer weiteren Ausführungsform.

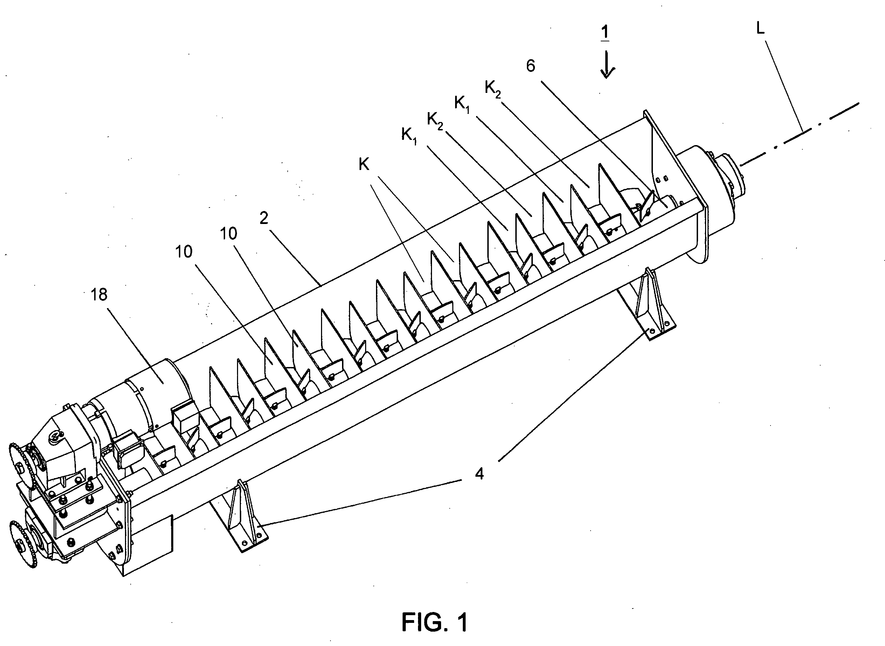

Fig. 1 zeigt eine vereinfachte Perspektivdarstellung einer erfindungsgemäßen Vorrichtung 1 nach einer ersten Ausführungsform. Die Vorrichtung 1 umfasst einen länglichen Behälter 2, in dem entlang seiner Längsachse L eine Mehrzahl von Kammern K ausgebildet sind. Die genaue Ausbildung dieser Kammern ist nachfolgend noch im Detail erläutert.

Der Behälter 2 ist an seiner Unterseite mit Fußelementen 4 versehen, die zur Befestigung an einem (nicht gezeigten) Rahmengestell oder dergleichen dienen. Das Rahmengestell dient zu einer gewünschten Positionierung des Behälters 2, nämlich derart, dass der Behälter 2 mit seiner Längsachse L im Wesentlichen horizontal angeordnet ist. Ein solches Rahmengestell zählt an sich zum Stand der Technik und bedarf insoweit keiner weiteren Erläuterung.

Innerhalb des Behälters 2 ist entlang von dessen Längsachse L ein Rotor 6 angeordnet. Entlang der Längsachse L des Behälters 2 sind darin Trennwände 10 angeordnet, zwischen denen die einzelnen Kammern K ausgebildet sind. Hierbei durchsetzt der Rotor 6 die in dem Behälter 2 ausgebildeten Kammern K und die Trennwände 10. Diese Kammern K grenzen jeweils aneinander an und sind durch entsprechende Durchlässe miteinander verbunden, wie nachfolgend noch im Detail erläutert.

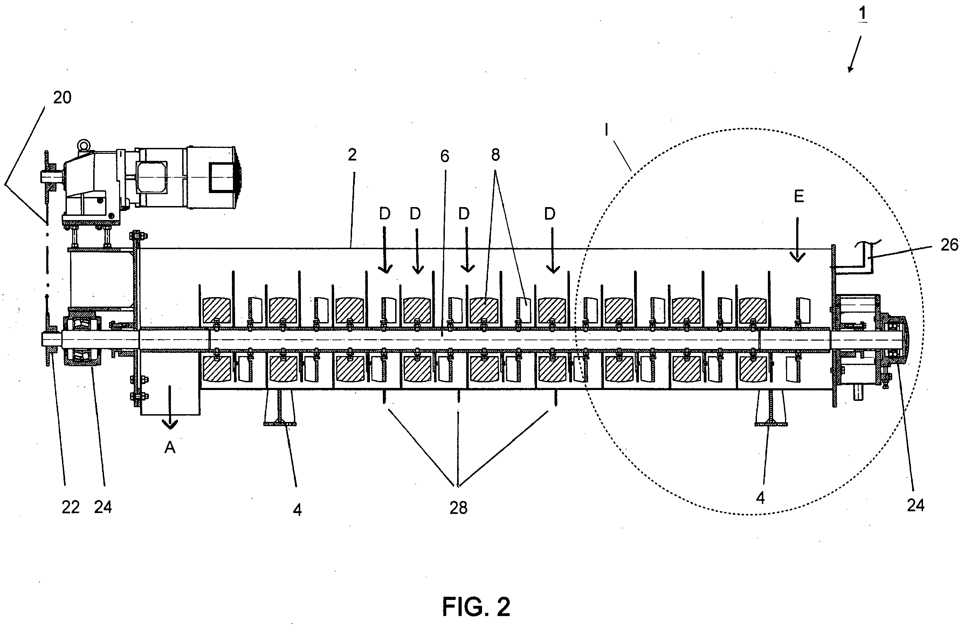

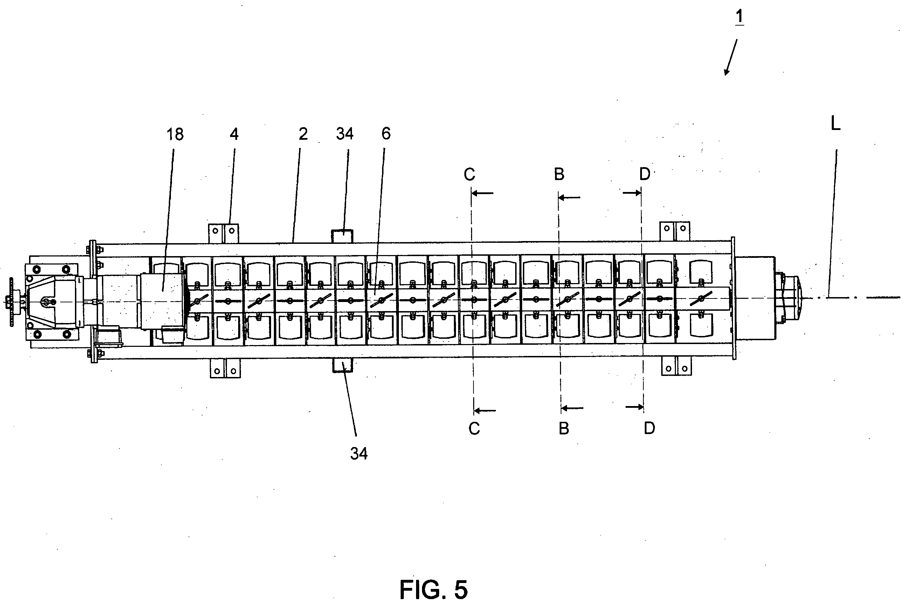

Unter Bezugnahme auf die Fig. 2 bis 7 sind weitere Details der Vorrichtung 1 und deren wesentliche Bauelemente dargestellt und erläutert. Die Fig. 2 zeigt eine seitliche Querschnittsansicht der Vorrichtung 1 von Fig. 1, wobei die Fig. 5 hiervon eine Draufsicht zeigt.

In der Seitenansicht von Fig. 2 sind mit "E" vereinfacht eine Einfüllöffnung, und mit "A" eine Austrittsöffnung symbolisiert, die in dem Behälter 2 ausgebildet sind. Diesbezüglich darf darauf hingewiesen werden, dass kleinstückiges Schüttgut durch die Einfüllöffnung E in den Behälter 2 eingefüllt werden kann, wobei das Schüttgut anschließend entlang der Längsachse L des Behälters 2 in Richtung seiner Austrittsöffnung A gefördert wird. Die genaue Positionierung der Einfüllöffnung E und der Austrittsöffnung A bezüglich des Behälters 2 ist in der Darstellung von Fig. 2 nur beispielhaft zu verstehen, und kann auch abweichend hiervon gewählt sein, in Abhängigkeit von weiteren Maschinen-oder Prozesskomponenten, welche an den Behälter 2 angeschlossen sind.

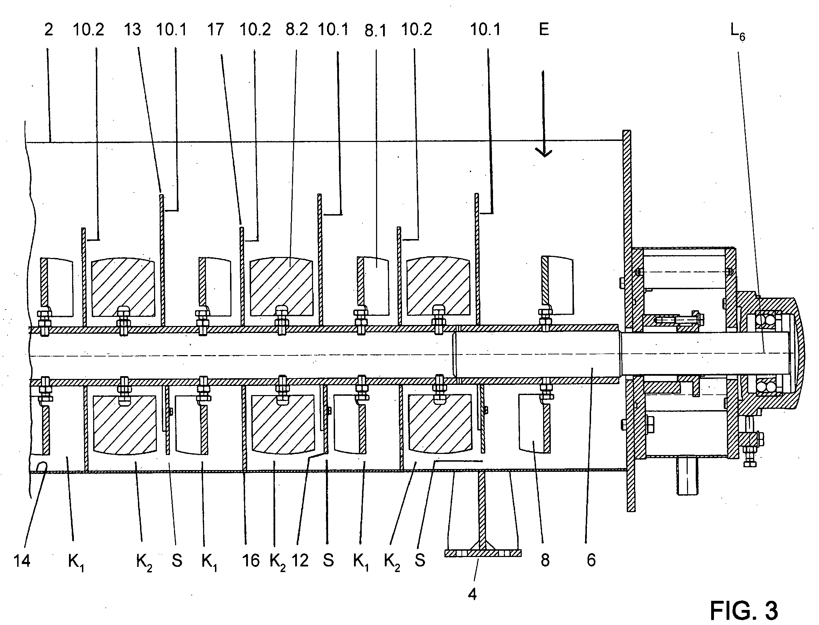

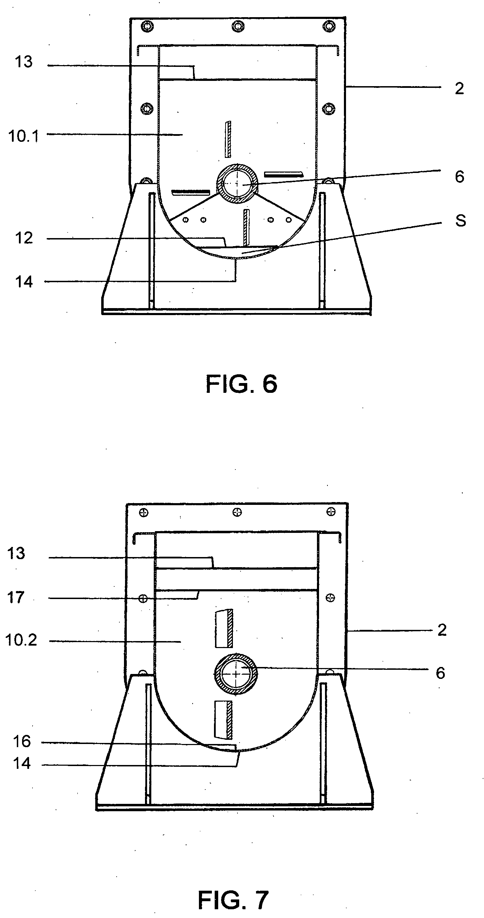

Die Kammern K in dem Behälter 2 sind bezüglich ihres Durchlasses zur jeweils daran angrenzenden Kammer alternierend ausgebildet, wozu im Detail auf die Fig. 3 verwiesen wird, die eine vergrößerte Ansicht des Bereichs I von Fig. 2 zeigt. Hiernach sind Kammern K₁ eines ersten Typs, und Kammern K₂ eines zweiten Typs vorgesehen. Die Trennwände 10.1 sind bei den Kammern K₁ angrenzend zu einer stromabwärts davon gelegenen Kammer K₂ dahingehend ausgebildet, dass ein unterer Rand 12 der Trennwand 10.1 von einem Bodenbereich 14 des Behälters 2 um einen Spalt S beabstandet ist. Die Fig. 6 zeigt eine Schnittansicht entlang der Linie B-B von Fig. 5, und verdeutlicht einen solchen Spalt S. Ein Spalt S bildet einen Durchlass von einer Kammer K₁ eines ersten Typs stromabwärts zu einer Kammer K₂ eines zweiten Typs. Bezüglich der Trennwände 10.1, deren unterer Rand 12 wie erläutert von dem Bodenbereich 14 um den Spalt S beabstandet ist, darf darauf hingewiesen werden, dass deren oberer Rand 13 jeweils eine vorbestimmte Höhe aufweist, worauf nachfolgend noch Bezug genommen wird.

Die Kammern K₂ eines zweiten Typs sind zu stromabwärts davon angrenzenden Kammern K₁ eines ersten Typs durch Trennwände 10.2 getrennt, deren unterer Rand 16 bündig, d.h. dicht mit dem Bodenbereich 14 des Behälters 2 abschließen. Ein entgegengesetzter oberer Rand 17 dieser Trennwände 10.2 weist eine vertikale Höhe auf, die im Vergleich zur vertikalen Höhe eines jeweiligen oberen Rands 13 der Trennwände 10.1, geringer ist. Durch diese geringere vertikale Höhe des oberen Rands 17 im Vergleich zum oberen Rand 13 wird für die Trennwände 10.2 ein Überlauf gebildet, nämlich von den Kammern K₂ vom zweiten Typ stromabwärts in die daran angrenzenden Kammern K₁ vom ersten Typ.

Zur Förderung von Schüttgut entlang der Längsachse L des Behälters 2 sind an dem Rotor 6 eine Mehrzahl von Paddeln 8 angebracht, beispielsweise derart, dass in jeder Kammer K₁ bzw. K₂ insgesamt vier Paddel 8 angebracht sind. Abweichend hiervon können an dem Rotor 6 in einer jeweiligen Kammer K auch weniger als vier, z.B. nur nur ein Paddel, oder auch mehr als vier Paddel befestigt sein.

Insbesondere in den Kammern K₁ vom ersten Typ, die wie vorstehend erläutert mit den stromabwärts davon angrenzenden Kammern K₂ vom zweiten Typ durch den Spalt S zwischen dem unteren Rand 12 einer Trennwand 10.1 und dem Bodenbereich 14 des Behälters 2 verbunden sind, ist es zweckmäßig, wenn die Paddel 8 eine geeignete Winkelstellung aufweisen, mittels der die Partikel des Schüttguts in Richtung des Spalts S gefördert werden. Dies bedeutet, dass die Paddel 8 mit ihrer Fläche jeweils schräg zur Längsachse L₆ des Rotors 6 (Fig. 3) ausgerichtet sind. Auf die Förderung von Schüttgut durch den Behälter 2 wird nachstehend noch im Detail Bezug genommen.

In den Kammern K₂ vom zweiten Typ ist es zweckmäßig, wenn die Paddel 8 derart an dem Rotor 6 befestigt sind, dass sie mit ihrer Fläche parallel zur Längsachse L₆ des Rotors 6 ausgerichtet sind. Hierdurch wird begünstigt, dass die Partikel des Schüttguts innerhalb einer jeweiligen Kammer K₂ vom zweiten Typ beim Rotieren des Rotor 6 vertikal nach oben in Richtung des oberen Rands 17 der Trennwände 10.2 gefördert werden, um anschließend über diesen oberen Rand 17 hinweg in eine stromabwärts davon gelegene Kammer K₁ vom ersten Typ zu gelangen. Optional ist es auch möglich, dass innerhalb einer Kammer K₂ vom zweiten Typ ein Paddel 8 mit seiner Fläche schräg zur Längsachse L₆ des Rotors 6 ausgerichtet ist, um eine Förderung von Schüttgut-Partikeln hinein in diese Kammer K₂ vom zweiten Typ zu begünstigen und eine "Verstopfung" in dem Spalt S angrenzend zu einer stromaufwärts davon gelegenen Kammer K₁ vom ersten Typ zu vermeiden.

Ein Antrieb bzw. eine Drehung des Rotors 6 wird durch eine motorische Einrichtung 18 erreicht, die oberhalb des Behälters 2 (Fig. 2) angebracht sein kann. Diese motorische Einrichtung 18 ist über geeignete Antriebsmittel 20, z.B. eine Kette oder ein Zahnriemen, mit einem an einer Stirnseite des Rotors 6 befestigten Zahnrad 22 verbunden. Der Rotor 6 ist durch Lagereinrichtungen 24 drehbar bezüglich der Längsachse L des Behälters 2 angeordnet. Durch einen Betrieb der motorischen Einrichtung 18 wird somit der Rotor 6 in dem Behälter 2 in Drehung versetzt, je nach Bedarf auch mit veränderlicher Drehzahl. Zwecks vereinfachter Darstellung sind die Antriebsmittel 20 nur in Fig. 2 dargestellt, und in den übrigen Figuren nicht gezeigt.

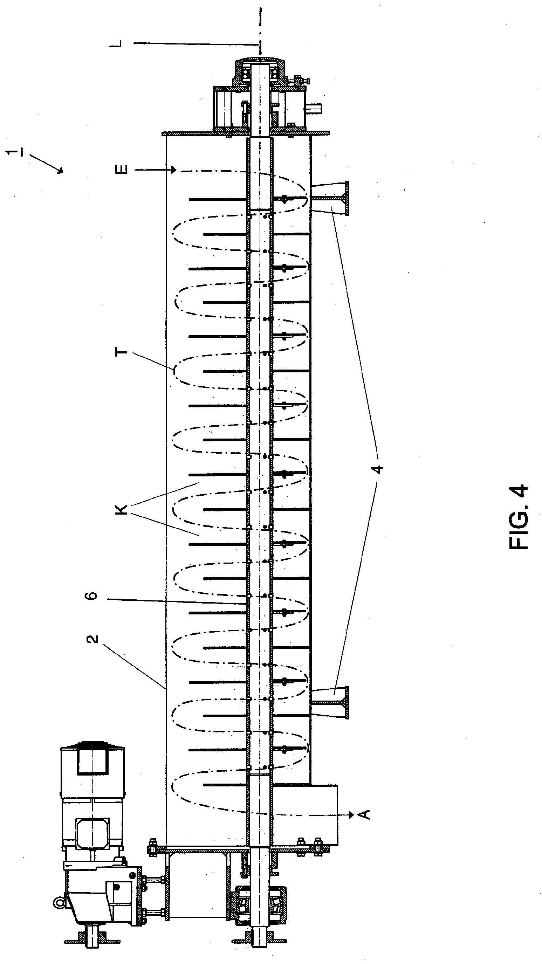

Zwischen der Einfüllöffnung E und der Austrittsöffnung A des Behälters 2 ist darin eine Transportstrecke T ausgebildet, die zumindest in vertikaler Ebene mäanderförmig verläuft. Ein solcher Verlauf der Transportstrecke T wird durch die verschiedene Ausgestaltung der Durchlässe begründet, die zwischen den jeweiligen Kammern K₁ bzw. K₂ alternierend entweder zwischen dem unteren Rand 12 von entsprechenden Trennwänden 10.1 und dem Bodenbereich 14 des Behälters 2, oder im Bereich des oberen Rands 17 von entsprechenden Trennwänden 10.2 vorgesehen sind. Ein solcher mäanderförmiger Verlauf der Transportstrecke T innerhalb des Behälters 2 wird ergänzend durch die Seitenansicht von Fig. 4 verdeutlicht, nämlich durch die strichpunktierte Linie. Zur Vereinfachung sind die Paddels 8, die an dem Rotor 6 befestigt sind, in der Fig. 4 nicht gezeigt.

Die Seitenansicht von Fig. 2 verdeutlicht weiters, dass der Rotor 6 angrenzend zum Bodenbereich 14 des Behälters 2 angeordnet ist. Dies hat vorteilhaft zur Folge, dass die Paddel 8, die an dem Rotor 6 befestigt sind, bei einem Drehen des Rotors 6 bis an den Bodenbereich 14 gelangen, und somit sämtlich auch dort befindliche Partikel des Schüttgutes umwälzen, zwecks einer Förderung entlang der Transportstrecke T ohne Ausbildung von "Totwasser-Gebieten".

Die Erfindung funktioniert nun wie folgt:
Kleinstückiges Schüttgut wird zum Mischen und/oder Reinigen durch die Einfüllöffnung E in den Behälter 2 eingefüllt. Bei diesem Schüttgut handelt es sich vorzugsweise um kleinteilige Kunststoff-Partikel, die zu recyceln sind. Bezüglich der Abmessungen der Partikel des Schüttgutes im Sinne von "kleinstückig" darf darauf hingewiesen werden, dass diese keinen Einschränkungen unterliegen, mit der Ausnahme, dass die Partikelgröße ausreichend klein zu bemessen ist, so dass das Schüttgut ohne die Bildung von Verstopfungen oder dergleichen entlang der mäanderförmigen Transportstrecke T durch den Behälter 2 hindurch gefördert werden kann.

Nachdem das Schüttgut in die Einfüllöffnung E des Behälters 2 eingefüllt worden ist, wird es bei Drehung des Rotors 6 durch die Kammern K hindurch, d.h. entlang der mäanderförmigen Transportstrecke T entlang der Längsachse L des Behälters 2 in Richtung von dessen Austrittsöffnung A gefördert. In den jeweiligen Kammern K₁ vom ersten Typ wird das Schüttgut durch eine Drehung des Rotors 6 und durch einen entsprechenden Kontakt mit den Paddeln 8 in Richtung des Spalts S zwischen dem unteren Rand 12 einer entsprechenden Trennwand 10.1 und dem Bodenbereich 14 des Behälters 2 gefördert, und in dieser Weise dann in eine stromabwärts davon gelegene Kammer K₂ vom zweiten Typ gefördert. Anschließend wird dann das Schüttgut in einer Kammer K₂ vom zweiten Typ vertikal nach oben gefördert. Zwischen den Partikeln, die in der Kammer K₂ von unten nachgefördert werden, und den bereits darüber befindlichen Partikeln des Schüttgutes wird eine intensive Friktion bzw. Reibung erzeugt. In Folge dessen werden die Partikel des Schüttgutes an ihrer Oberfläche intensiv gereinigt, so dass dort anhaftende Fremdstoffe, Etiketten oder dergleichen entfernt bzw. gelöst werden. Durch ein stetes Fördern des Schüttgutes in den Kammern K₂ (vom zweiten Typ) vertikal nach oben wird das Schüttgut dann über den oberen Rand 17 einer entsprechenden Trennwand 10.2, die eine jeweilige Kammer K₂ von einer stromabwärts dazu gelegenen Kammer K₁ trennt, hinübergehoben, so dass das Schüttgut anschließend wieder in eine Kammer K₁ vom ersten Typ gelangt. Der soeben erläuterte Vorgang in Bezug auf eine Förderung des Schüttgutes durch den Spalt S hindurch in eine Kammer K₂ vom zweiten Typ beginnt von Neuem, nämlich solange, bis das Schüttgut an das Ende der Transportstrecke T gelangt ist und durch die Austrittsöffnung A aus dem Behälter 2 heraus gelangt.

Bezüglich einer Förderung des Schüttgutes in einer Kammer K₁ vom ersten Typ, in einer Richtung vertikal nach unten, nachdem das Schüttgut den oberen Rand 17 einer Trennwand 10.2 überquert hat und dann in Richtung des Spalts S zur nächsten Kammer K₂ gefördert wird darf darauf hingewiesen werden, dass auch hierbei eine intensive Bewegung bzw. Friktion zwischen den Partikeln des Schüttgutes vorliegt. Im Vergleich hierzu ist die Friktion in den jeweiligen Kammern K₂ vom zweiten Typ, wenn das Schüttgut vertikal von unten nach oben gefördert wird, größer, was eine noch intensivere Reinigung der Oberfläche der Schüttgut-Partikel bewirkt.

Die Reinigung des Schüttgutes entlang der Transportstrecke T des Behälters 2 kann durch eine Flüssigkeit verbessert werden, die zusammen mit dem Schüttgut in den Behälter 2 eingefüllt wird. Zu diesem Zweck kann im Bereich der Einlassöffnung E ein Wasseranschluss vorgesehen sein, in Fig. 2 symbolisch stark vereinfacht durch "26" dargestellt. Durch diesen Wasseranschluss 26 kann beim Einfüllen des Schüttgutes gleichzeitig Wasser in den Behälter 2 eingelassen werden. Die Menge an Wasser wird hierbei derart gewählt, dass die Partikel des Schüttgutes ausreichend mit Wasser benetzt werden, zwecks einer verbesserten Ablösung von daran anhaftenden Fremdstoffen bzw. Etiketten.

Alternativ zu Wasser ist es ebenfalls möglich, durch den Wasseranschluss 26 beispielsweise auch Natronlauge, oder eine Mischung aus Wasser und Natronlauge, in den Behälter 2 einzufüllen.

Die Flüssigkeit, die wie vorstehend erläutert in den Behälter 2 eingefüllt werden kann und dann zusammen mit dem Schüttgut entlang der Transportstrecke T durch den Behälter 2 hindurchgefördert wird, wird ebenfalls an der Austrittsöffnung A des Behälters 2 ausgetragen. Durch eine anschließende (nicht gezeigte) Filterung kann dass gereinigte Schüttgut dann von dem Schmutzwasser getrennt werden.

Je nach axialer Länge des Behälters 2 kann es vorteilhaft sein, entlang der Transportstrecke T eine bereits verschmutzte Flüssigkeit abzutrennen, und dafür eine "frische" Flüssigkeit zuzuführen. Zu diesem Zweck können - wie in Fig. 2 vereinfacht dargestellt - im Bodenbereich 14 des Behälters 2 an ausgewählten Stellen Ablassöffnungen 28 vorgesehen sein, zwecks einer Abführung von Schmutzwasser bzw. von Flüssigkeit, die bereits Verschmutzungen und Fremdstoffe aufgenommen hat, die zuvor an dem Schüttgut anhafteten. Zusätzlich ist es möglich, entlang der Transportstrecke T bzw. des Behälters 2 eine frische Reinigungsflüssigkeit, z.B. Wasser oder Natronlauge, über Düsen D in den Behälter 2 einzuspritzen, nämlich von oben herab in entweder ausgewählte Kammern K₁ bzw. K₂, oder in alle diese Kammern. In Fig. 2 sind solche Düsen D zum Einspritzen einer Flüssigkeit symbolisch und vereinfacht durch Pfeile "D" symbolisiert, und vereinfacht nur für einige der Kammern K dargestellt.

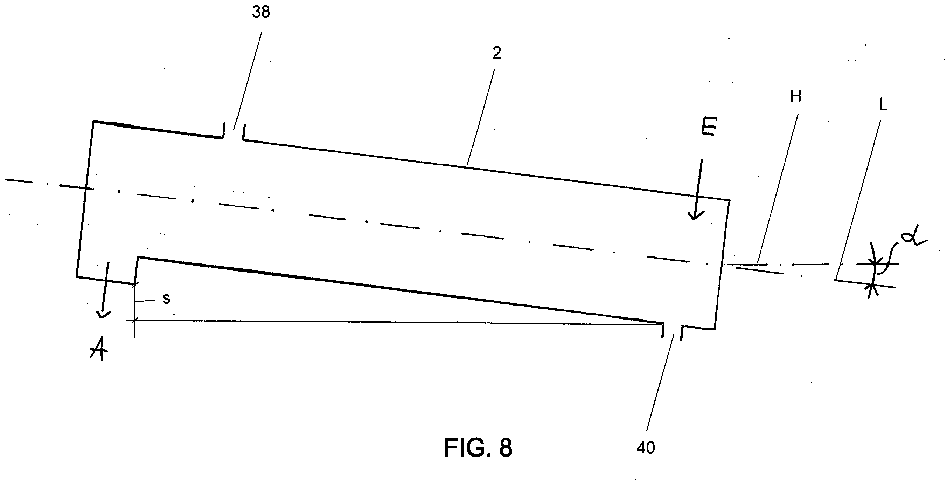

Ergänzend oder alternativ zu den vorstehend genannten Möglichkeiten für das Einspeisen einer Reinigungsflüssigkeit hinein in den Behälter 2 kann auch vorgesehen sein, dass eine solche Reinigungsflüssigkeit in den Behälter 2 durch einen Flüssigkeitseinlass 38 eingebracht wird, der - bezogen auf die Längsachse L des Behälters 2 - angrenzend bzw. in Nähe zur Austrittsöffnung A angeordnet ist. Dies ist in Fig. 8 veranschaulicht, die eine stark vereinfachte Seitenansicht des Behälters 2 nach dieser Ausführungsform zeigt. Der Behälter 2 weist einen Flüssigkeitsauslass 40 auf, der - bezogen auf die Längsachse L des Behälters 2 - angrenzend bzw. in Nähe zur Einfüllöffnung E angeordnet ist.

Im Falle des Einbringens einer Reinigungsflüssigkeit durch den Flüssigkeitseinlass 38 in den Behälter 2 wird das Schüttgut in den Kammern K des Behälters nach dem "Gegenstrom-Prinzip" behandelt. Dies bedeutet, dass die durch den Flüssigkeitseinlass 38 eingebrachte Reinigungsflüssigkeit im Vergleich zur Transportrichtung für das Schüttgut (z.B. in der Ansicht von Fig. 8 von rechts nach links) innerhalb des Behälters 2 entgegengesetzt strömt, nämlich in Richtung des Flüssigkeitsauslasses 40 (z.B. in der Ansicht von Fig. 8 von links nach rechts). Diese Strömungsrichtung der Reinigungsflüssigkeit wird dadurch begünstigt, dass durch den Flüssigkeitseinlass 38 stetig weitere Reinigungsflüssigkeit in den Behälter 2 zugegeben wird, und/oder auch dadurch, dass der Behälter 2 mit seiner Längsachse L um einen Winkel α bezüglich der Horizontalen H schräggestellt sein kann. Durch diese Schrägstellung befindet sich die Austrittsöffnung A in vertikaler Richtung um eine Strecke s oberhalb des Flüssigkeitsauslasses 40, was ein Strömen der Reinigungsflüssigkeit innerhalb des Behälters 2 in Richtung des Flüssigkeitsauslasses 40 begünstigt.

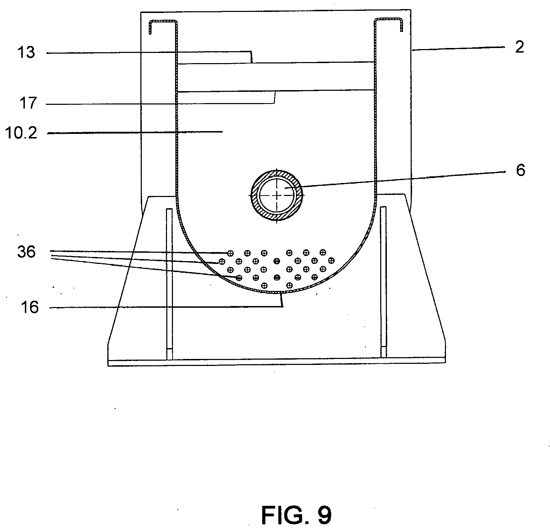

Im Zusammenhang mit der Ausführungsform gemäß Fig. 8, bei der eine Reinigungsflüssigkeit in den Behälter 2 nach dem "Gegenstrom-Prinzip" eingegeben wird, darf darauf hingewiesen werden, dass hierbei die Trennwände 10.2 angrenzend an den unteren Rand 16 mit einer Mehrzahl von Durchgangslöchern 36 versehen sind. Dies wird durch die Darstellung einer Trennwand 10.2 in Fig. 9 veranschaulicht. Durch die Durchgangslöcher 36 ist eine Fluidverbindung, und somit ein Strömen der Reinigungsflüssigkeit durch die Kammern K hindurch möglich, nämlich angrenzend zum bzw. in Nähe des Bodenbereichs 14 des Behälters 2. Anders ausgedrückt, bilden die in einer jeweiligen Trennwand 10.2 ausgebildeten Durchgangslöcher 36 quasi ein Sieb, durch das die Reinigungsflüssigkeit hindurch strömen kann. Der Durchmesser der Durchgangslöcher 36 ist hierbei wesentlich kleiner als die Größe der Schüttgut-Partikel bemessen, mit der Folge, dass durch die Durchgangslöcher 36 allein die Reinigungsflüssigkeit, jedoch nicht die Schüttgut-Partikel selber hindurch treten können. Der Vollständigkeit halber darf darauf verwiesen werden, dass eine Ausbildung von Durchgangslöchern 36 in den Trennwänden 10.1 entbehrlich ist, weil diese wie erläutert (Fig. 6) mit ihrem unteren Rand 12 von dem Bodenbereich 14 des Behälters 2 um den Spalt S beabstandet sind.

Nach einem Einbringen der Reinigungsflüssigkeit durch den Flüssigkeitseinlass 38 in den Behälter 2 gelangt die Reinigungsflüssigkeit dann sukzessive in alle Kammern K des Behälters, und bewirkt darin, dass die Oberfläche der Schüttgut-Partikel vollständig mit der Reinigungsflüssigkeit benetzt werden. Nachdem die Reinigungsflüssigkeit durch alle Kammern K des Behälters 2 - entgegen der Transportrichtung des Schüttgutes - hindurch getreten ist, wird sie, ggf. in Verbindung mit darin gelösten Verschmutzungen oder dergleichen, durch den Flüssigkeitsauslass 40 aus dem Behälter 2 ausgetragen.

Die vorstehend erläuterte Möglichkeit der Einbringung einer Reinigungsflüssigkeit in den Behälter 2 nach dem "Gegenstrom-Prinzip" (vgl. Fig. 8) führt auch zu dem Vorteil, dass die Menge an benötigter Reinigungsflüssigkeit derart reduziert werden kann, dass die Oberfläche der Partikel des Schüttgutes noch vollständig von dieser Reinigungsflüssigkeit benetzt werden, jedoch ein Mehrverbrauch an Reinigungsflüssigkeit bzw. Wasser vermieden wird.

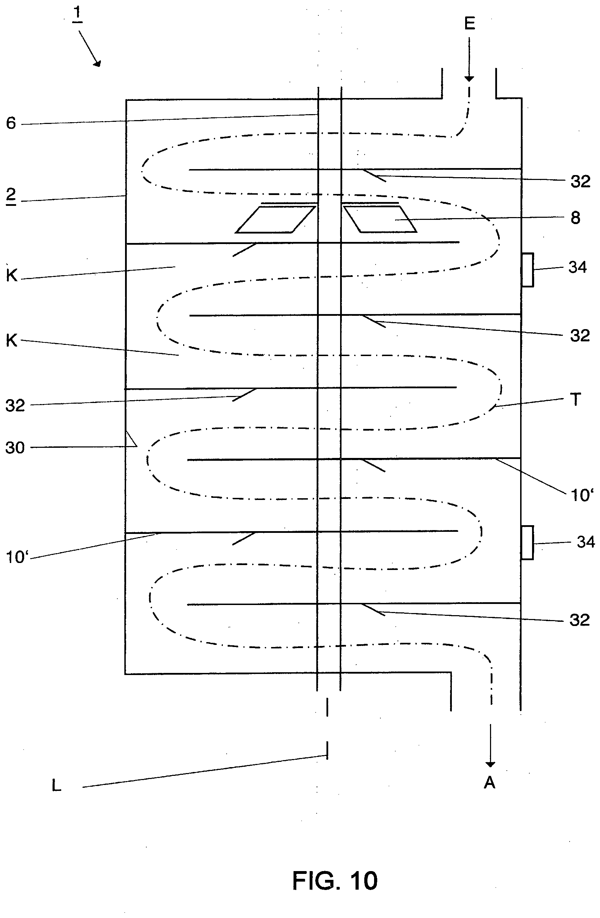

Fig. 10 zeigt eine alternative Ausführungsform einer erfindungsgemäßen Vorrichtung 1', deren länglicher Behälter 2 derart angeordnet ist, dass seine Längsachse im Wesentlichen vertikal verläuft. Soweit wesentliche Bauelemente der Ausführungsform gemäß Fig. 10 jenen der Ausführungsform gemäß Fig. 1 entsprechen, werden hierfür die gleichen Bezugszeichen verwendet.

Das Funktionsprinzip der Ausführungsform gemäß Fig. 10 entspricht der Ausführungsform von Fig. 1, mit dem Unterschied, dass hierbei nun das Schüttgut von oben nach unten durch den Behälter 2 hindurchgefördert wird. In den Behälters 2 sind ebenfalls eine Mehrzahl von Kammern K ausgebildet, die alternierend mit ihrem linken bzw. rechten Rand von einer Innenwandung 30 des Behälters 2 beabstandet sind. Entsprechend werden die Durchlässe zwischen aneinander angrenzenden Kammern K durch einen Abstand zwischen dem linken bzw. rechten Rand einer jeweiligen Trennwand 10' und der Innenwandung 30 des Behälters 2 gebildet. Hierdurch ist innerhalb des Behälters 2 der Ausführungsform gemäß Fig. 10 ebenfalls eine mäanderförmige Transportstrecke T gebildet, wie in der Fig. 10 symbolisch angedeutet.

Die Förderung von Schüttgut entlang der mäanderförmigen Transportstrecke T des Behälters 2 bei der Ausführungsform von Fig. 10 wird ebenfalls durch einen drehenden Rotor 6 mit daran befestigten Paddeln 8 unterstützt. Hierbei ist der Rotor in etwa in einem mittigen Bereich der Trennwände 10' angeordnet. Zusätzlich kann vorgesehen sein, dass das Schüttgut in den einzelnen Kammern K durch Druckluft jeweils in Richtung eines Durchlasses zur stromabwärts davon gelegenen nächsten Kammer gefördert wird. Hierzu können an den Trennwänden Druckluftdüsen 32 angebracht sein, die mit ihrer Auslassöffnung in Richtung eines Durchlasses zur jeweils stromabwärts gelegenen nächsten Kammer ausgerichtet sind.

Die Reinigungswirkung für das Schüttgut kann beim Hindurchfördern durch den Behälter 2 weiter dadurch verbessert werden, dass - insbesondere bei Verwendung einer Reinigungsflüssigkeit - das Innere des Behälters 2 auf eine vorbestimmte Temperatur aufgeheizt wird. Zu diesem Zweck können an dem Behälter 2 Heizeinrichtungen 34 vorgesehen sein, die in Fig. 5 und Fig. 10 stark vereinfacht und lediglich symbolisch dargestellt sind. Auch die Position der Anbringung dieser Heizeinrichtungen 34 an dem Gehäuse 2, wie sie in Fig. 5 und Fig. 10 gezeigt ist, ist nur beispielhaft zu verstehen, und ist bei Bedarf auch an anderen Stellen des Gehäuses möglich. Die Heizeinrichtungen 34 können als Heizspirale oder als Dampfmantel ausgeführt sein. Durch die Heizeinrichtungen 34 wird erreicht, dass das Schüttgut zusammen mit Flüssigkeit mit einer vorbestimmten Temperatur entlang der Transportstrecke T gefördert wird und dadurch ein Ablösen von Fremdstoffen, Verschmutzungen, Klebstoffe, Fetten, Etiketten oder dergleichen von einer Oberfläche der Partikel des Schüttgutes noch effizienter ist. Alternativ oder ergänzend zu den genannten Heizeinrichtungen 34 ist es auch möglich, Flüssigkeit direkt mit einer vorbestimmten Temperatur in den Behälter 2 einzulassen, was zu der gleichen Wirkung einer effizienteren Reinigung des Schüttgutes führt.

Je nach Beschaffenheit des Schüttgutes ist es möglich, einen Durchsatz durch den Behälter 2 bzw. die Zeitspanne, die ein bestimmter Partikel des Schüttgutes für den Transport zwischen der Einfüllöffnung E und der Austrittsöffnung A innerhalb des Behälters 2 benötigt, veränderlich anzupassen. Dies kann durch folgende Maßnahmen erreicht werden: Veränderung der Drehzahl des Rotors 6; Anzahl und Größe der Paddel oder von vergleichbaren Schaufeln, die an dem Rotor befestigt sind; Veränderung einer Winkelstellung der Paddel 8 bezüglich einer Längsachse L₆ des Rotors 6; Veränderung der Durchlassöffnungen zwischen aneinander angrenzenden Kammern K innerhalb des Behälters 2, beispielsweise durch eine Vergrößerung/Verkleinerung des Spalts S mittels eines verschieblichen Wandelementes 36 (Fig. 6); Dimensionierung der Kammern K innerhalb des Behälters 2.

Bezüglich der Darstellung von Figur 10 darf darauf hingewiesen werden, dass es sich hierbei auch um eine Draufsicht auf eine Vorrichtung nach der Ausführungsform von Fig. 1 handeln kann. Dies bedeutet, dass die Transportstrecke T innerhalb des Behälters 2 mäanderförmig nicht nur innerhalb einer vertikalen Ebene, sondern auch innerhalb einer horizontalen Ebene verläuft, was durch entsprechende Ausgestaltungen der Trennwände 10' am linken bzw. rechten Rand jeweils angrenzend zu der Innenwandung 30 des Behälters ermöglicht wird.

Zusammenfassend sieht die Erfindung eine Vorrichtung und ein Verfahren vor, wobei eine intensive Reinigung von Schüttgut auch ohne die Verwendung von kostspieligen Werkzeugen oder dergleichen erreicht wird, nämlich allein durch die Bewegung von Partikeln des Schüttgutes relativ zueinander. Dies gilt insbesondere für die Vorrichtung 1 nach der Ausführungsform von Fig. 1, und für diese Ausführungsform insbesondere für die Kammern K₂ vom zweiten Typ, in denen das Schüttgut entgegen der Schwerkraft von unten nach oben gefördert wird.

## Patentansprüche

1. Vorrichtung (1) zum Behandeln von insbesondere kleinstückigem Schüttgut, umfassend
einen länglichen Behälter (2) mit einer Einfüllöffnung (E) und einer Austrittsöffnung (A), wobei zwischen der Einfüllöffnung (E) und der Austrittsöffnung (A) innerhalb des Behälters (2) eine Transportstrecke (T) zur Förderung des Schüttguts ausgebildet ist,
wobei in dem Behälter (2) entlang von dessen Längsachse (L) zumindest ein Rotor (6) angeordnet ist, an dem zumindest ein Paddel (8) und/oder Schaufel angebracht ist, um das Schüttgut in eine vorbestimmte Richtung der Transportstrecke (T) zu fördern, und
wobei der Behälter (2) ortsfest aufgestellt ist, wobei in dem Behälter (2) entlang seiner Längsachse (L) eine Mehrzahl von aneinander angrenzenden und miteinander verbundenen Kammern (K) ausgebildet sind, wobei die Kammern (K₁; K₂) bezüglich eines Durchlasses zu einer jeweils daran angrenzenden Kammer (K₂; K₁) alternierend ausgebildet sind und dadurch die Transportstrecke (T) zur Förderung des Schüttgutes mäanderförmig verläuft,
wobei der Behälter (2) mit seiner Längsachse (L) horizontal angeordnet ist,
**dadurch gekennzeichnet,**
**dass** die Transportstrecke (T) zur Förderung des Schüttgutes zumindest in vertikaler Ebene mäanderförmig verläuft.

2. Vorrichtung (1) nach Anspruch 1, **dadurch gekennzeichnet, dass** der Rotor (6) angrenzend an einen Bodenbereich (14) des Behälters (2) angeordnet ist, wobei die Kammern (K) innerhalb des Behälters (2) alternierend in Form von Kammern (K₁) eines ersten Typs und Kammern (K₂) eines zweiten Typs ausgebildet sind, wobei die Trennwände (10.1) bei einer Kammer (K₁) vom ersten Typ angrenzend zu einer stromabwärts davon gelegenen Kammer (K₂) vom zweiten Typ mit ihrem unteren Rand (12) von dem Bodenbereich (14) des Behälters (2) um einen Spalt (S) beabstandet sind, wobei die Trennwände (10.2) bei einer Kammer (K₂) vom zweiten Typ angrenzend zu einer stromabwärts davon gelegenen Kammer (K₁) vom ersten Typ mit ihrem unteren Rand (16) mit dem Bodenbereich (14) des Behälters (2) dicht abschließen und mit ihrem oberen Rand (17) eine geringere vertikaler Höhe aufweisen als die dazu angrenzenden Trennwände (10.1), so dass die Durchlässe zwischen aneinander angrenzenden Kammern (K₁; K₂) entweder durch den Spalt (S) zwischen dem unteren Rand (12) einer Trennwand (10.1) und dem Bodenbereich (14) des Behälters (2) oder über dem oberen Rand (17) einer Trennwand (10.2) gebildet werden.

3. Vorrichtung (1) nach Anspruch 2, **dadurch gekennzeichnet, dass** in einer jeweiligen Kammer (K₁) vom ersten Typ, die mit einer stromabwärts davon gelegenen Kammer (K₂) vom zweiten Typ durch den Spalt (S) zwischen dem unteren Rand (12) einer Trennwand (10.1) und dem Bodenbereich (14) des Behälters (2) verbunden ist, an dem Rotor (6) eine Mehrzahl von Paddeln (8) und/oder Schaufeln angebracht sind, durch die das Schüttgut in Richtung des Spalts (S) gefördert wird, wobei zumindest ein Paddel (8) mit seiner Fläche schräg zur Längsachse (L₆) des Rotors (6) ausgerichtet ist.

4. Vorrichtung (1) nach Anspruch 2 oder 3, **dadurch gekennzeichnet, dass** in einer jeweiligen Kammer (K₂) vom zweiten Typ, die mit einer stromabwärts davon gelegenen Kammer (K₁) vom ersten Typ über den oberen Rand (17) einer Trennwand (10.2) verbunden ist, an dem Rotor (6) eine Mehrzahl von Paddeln (8) und/oder Schaufeln angebracht sind, durch die das Schüttgut in vertikaler Richtung zum oberen Rand (17) einer Trennwand (10.2) gefördert wird, wobei zumindest ein Paddel (8) mit seiner Fläche parallel zur Längsachse (L₆) des Rotors (6) ausgerichtet ist, vorzugsweise, dass zumindest ein Paddel (8) mit seiner Fläche schräg zur Längsachse (L₆) des Rotors (6) ausgerichtet ist.

5. Vorrichtung (1) nach einem der Ansprüche 2 bis 4, **dadurch gekennzeichnet, dass** die Trennwände (10.2) zwischen den Kammern (K₂) vom zweiten Typ und den stromabwärts davon gelegenen Kammern (K₁) vom ersten Typ zumindest im Bereich ihres unteren Rands (16) und angrenzend an den Bodenbereich (14) des Behälters (2) jeweils eine Mehrzahl von Durchgangslöchern (36) aufweisen, wobei die Durchgangslöcher (36) eine Fluidverbindung zwischen den Kammern (K) gewährleisten und mit ihrem Durchmesser (36) kleiner als die Partikel des Schüttguts gewählt sind, wobei der Behälter (2) angrenzend an seine Austrittsöffnung (A) einen Flüssigkeitseinlass (38) und angrenzend an seine Einfüllöffnung (E) einen Flüssigkeitsauslass (40) aufweist, vorzugsweise, dass der Behälter (2) mit seiner Längsachse (L) um einen Winkel (α) derart bezüglich der Horizontalen (H) geneigt ist, dass die Austrittsöffnung (A) sich in vertikaler Richtung um eine Strecke (s) oberhalb des Flüssigkeitsauslasses (40) befindet.

6. Vorrichtung (1) zum Behandeln von insbesondere kleinstückigem Schüttgut, umfassend
einen länglichen Behälter (2) mit einer Einfüllöffnung (E) und einer Austrittsöffnung (A), wobei zwischen der Einfüllöffnung (E) und der Austrittsöffnung (A) innerhalb des Behälters (2) eine Transportstrecke (T) zur Förderung des Schüttguts ausgebildet ist,
wobei in dem Behälter (2) entlang von dessen Längsachse (L) zumindest ein Rotor (6) angeordnet ist, an dem zumindest ein Paddel (8) und/oder Schaufel angebracht ist, um das Schüttgut in eine vorbestimmte Richtung der Transportstrecke (T) zu fördern, und
wobei der Behälter (2) ortsfest aufgestellt ist, wobei in dem Behälter (2) entlang seiner Längsachse (L) eine Mehrzahl von aneinander angrenzenden und miteinander verbundenen Kammern (K) ausgebildet sind, wobei die Kammern (K₁; K₂) bezüglich eines Durchlasses zu einer jeweils daran angrenzenden Kammer (K₂; K₁) alternierend ausgebildet sind und dadurch die Transportstrecke (T) zur Förderung des Schüttgutes mäanderförmig verläuft,
**dadurch gekennzeichnet,**
**dass** der Behälter (2) mit seiner Längsachse (L) vertikal angeordnet ist und dabei das Schüttgut vertikal von oben nach unten durch den Behälter förderbar ist, wobei die Trennwände (10') zwischen den Kammern (K) alternierend mit ihrem linken bzw. rechten Rand von einer Innenwandung (30) des Behälters (2) beabstandet sind, so dass die Durchlässe zwischen aneinander angrenzenden Kammern (K) durch einen Abstand zwischen dem linken bzw. rechten Rand einer jeweiligen Trennwand (10') und der Innenwandung (30) des Behälters (2) gebildet werden, vorzugsweise, dass der Rotor (6) in etwa in einem mittigen Bereich der Trennwände (10') angeordnet ist.

7. Vorrichtung (1') nach Anspruch 6, **dadurch gekennzeichnet, dass** an dem Rotor (6) in den jeweiligen Kammern (K) zumindest ein Paddel (8) und/oder zumindest eine Schaufel angebracht sind, um das Schüttgut in Richtung des Durchlasses zur nächsten stromabwärts gelegenen Kammer zu fördern, vorzugsweise, dass das Schüttgut in den jeweiligen Kammern (K) durch Druckluft in Richtung der zwischen den jeweils aneinander angrenzenden Kammern (K) ausgebildeten Durchlässe gefördert wird, weiter vorzugsweise, dass an den Trennwänden (10') Druckluftdüsen (32) angebracht sind, die mit ihrer Auslassöffnung in Richtung der entsprechenden Durchlassöffnungen ausgerichtet sind.

8. Vorrichtung (1; 1') nach einem der Ansprüche 1 bis 7, **dadurch gekennzeichnet, dass** zumindest eine Heizeinrichtung (34) vorgesehen ist, mittels der ein Innenraum des Behälters (2) temperierbar ist, und/oder dass der Behälter (2) unter Vakuum setzbar ist und zu diesem Zweck gegenüber der Umgebung abdichtbar ist.

9. Verfahren zum Behandeln von insbesondere kleinstückigem Schüttgut innerhalb eines länglichen Behälters (2), in dem eine Transportstrecke (T) zur Förderung des Schüttguts ausgebildet ist,
wobei der Behälter (2) ortsfest aufgestellt ist und das Schüttgut durch den Behälter (2) entlang der Transportstrecke (T) mäanderförmig gefördert wird,
wobei der Behälter (2) mit seiner Längsachse (L) horizontal angeordnet ist,
**dadurch gekennzeichnet,**
**dass** die Transportstrecke (T) zur Förderung des Schüttgutes zumindest in vertikaler Ebene verläuft, so dass während des mäanderförmigen Förderns des Schüttgutes entlang der Transportstrecke (T), nämlich alternierend in jeder zweiten Kammer innerhalb des Behälters, das Schüttgut von unten nach oben gefördert wird und dabei Partikel des Schüttgutes entlang der Transportstrecke (T) relativ zu benachbarten und insbesondere oberhalb davon befindlichen Partikeln in Bewegung versetzt werden und dadurch für das Schüttgut ein Mischen und Reinigen erzielt wird, und
**dass** in dem Behälter (2) entlang seiner Längsachse (L) eine Mehrzahl von aneinander angrenzenden und miteinander verbundenen Kammern (K) ausgebildet sind, wobei die Kammern (K) bezüglich eines Durchlasses zu einer jeweils daran angrenzenden Kammer (K) alternierend ausgebildet sind und dadurch das Schüttgut entlang der Transportstrecke (T) mäanderförmig gefördert wird.

10. Verfahren nach Anspruch 9, **dadurch gekennzeichnet, dass** das Schüttgut _ in dem Behälter (2) entlang der Transportstrecke (T) durch einen Rotor (6) in eine vorbestimmte Richtung gefördert wird, wobei der Rotor (6) Trennwände (10), die zwischen den jeweiligen Kammern (K) vorgesehen sind, durchsetzt, vorzugsweise, dass an dem Rotor (6) eine Mehrzahl von Paddeln (8) und/oder Schaufeln angebracht sind, mit denen das Schüttgut in eine vorbestimmte Richtung der Transportstrecke (T) gefördert wird, weiter vorzugsweise, dass eine Winkelstellung der Paddel (8) oder der Schaufeln bezüglich des Rotor (6) verstellbar ist, weiter vorzugsweise, dass eine Drehzahl des Rotors (6) steuerbar veränderlich ist, um einen Durchsatz des Schüttgutes durch den Behälter (2) auf einen vorbestimmten Wert einzustellen.

11. Verfahren nach Anspruch 10, **dadurch gekennzeichnet, dass** die Durchlässe von den Kammern (K) zu den jeweils daran angrenzenden Kammern (K) veränderlich sind, um einen Durchsatz des Schüttgutes durch den Behälter (2) auf einen vorbestimmten Wert einzustellen.

12. Verfahren nach einem der Ansprüche 9 bis 11, **dadurch gekennzeichnet, dass** in den Behälter (2) eine Flüssigkeit, vorzugsweise Wasser oder Natronlauge, eingebracht wird, so dass das Schüttgut in dem Behälter (2) mit der Flüssigkeit vermischt wird, vorzugsweise, dass die Menge an Flüssigkeit, die in dem Behälter (2) eingebracht wird, derart gewählt wird, dass die Partikel des Schüttguts an ihrer Oberfläche vollständig von der flüssigkeitsbenetzt werden.

13. Verfahren nach einem der Ansprüche 9 bis 12, **dadurch gekennzeichnet, dass** der Innenraum des Behälters (2) auf eine vorbestimmte Temperatur aufgeheizt wird und/oder die Flüssigkeit, die in den Behälter (2) eingebracht wird, eine vorbestimmte Temperatur aufweist.

14. Verfahren nach einem der Ansprüche 9 bis 13, **dadurch gekennzeichnet, dass** das Behandeln von Schüttgut innerhalb des Behälters (2) unter Vakuum erfolgt.

15. Verfahren nach einem der Ansprüche 9 bis 14, das mit einer Vorrichtung (1; 1') nach einem der Ansprüche 1 bis 8 durchgeführt wird.

## Claims

1. A device (1) for treatment of especially small-sized bulk material, comprising
an elongate container (2) with a filling port (E) and an outlet port (A), with a transport path (T) for conveying the bulk material being configured between the filling port (E) and the outlet port (A) within the container (2), with at least a rotor (6) being arranged in the container (2) along its longitudinal axis (L) to which at least a paddle (8) and/or blade is attached in order to convey the bulk material in a predetermined direction of the transport path (T), and
with the container (2) being positioned stationary, with a plurality of adjacent chambers (K) connected with each other being configured in the container (2) along ist longitudinal axis (L), with the chambers (K₁; K₂) being configured alternatingly with respect to a passage to an adjacent chamber in each case, and thus the transport path (T) for conveyance of the bulk material running in a meandering pattern,
with the container (2) being arranged horizontally with its longitudinal axis (L),
**characterized in**
**that** the transport path (T) for conveyance of the bulk material extends in a meandering pattern at least in a vertical plane.

2. The device (1) according to claim 1, **characterized in that** the rotor (6) is arranged adjacent to a bottom section (14) of the container (2), with the chambers (K) being configured within the container (2) alternatingly in the form of chambers (K₁) of a first type and chambers (K₂) of a second type, with the separating walls (10.1) in a chamber (K₁) of the first type adjacent to a downstream chamber (K₂) of the second type with their lower border (12) being spaced apart from the bottom section (14) of the container (2) by a gap (S), with the separating walls (10.2) in a chamber (K₂) of the second type adjacent to a downstream chamber (K₁) of the first type with their lower border (16) sealing with the bottom section (14) of the container (2), and with their upper border (17) comprising a lower vertical height than the adjacent separating walls (10.1) so that the passages between adjacent chambers (K₁; K₂) are either formed by the gap (S) between the lower border (12) of a separating wall (10.1) and the bottom section (14) of the container (2) or above the upper border (17) of a separating wall (10.2).

3. The device (1) according to claim 2, **characterized in that** in a respective chamber (K₁) of the first type, which is connected with a downstream chamber (K₂) of the second type by the gap (S) between the lower border (12) of a separating wall (10.1) and the bottom section (14) of the container (2), a plurality of paddles (8) and/or blades is attached to the rotor (6) by means of which the bulk material is conveyed in the direction of the gap (S), with at least one paddle (8) with its surface being directed inclined to the longitudinal axis (L₆) of the rotor (6).

4. The device (1) according to claim 2 or 3, **characterized in that** in a respective chamber (K₂) of the second type, which is connected with a downstream chamber (K₁) of the first type via the upper border (17) of a separating wall (10.2), a plurality of paddles (8) and/or blades is attached to the rotor (6) by means of which the bulk material is conveyed in vertical direction to the upper border (17) of a separating wall (10.2), with at least a paddle (8) with its surface being directed in parallel to the longitudinal axis (L₆) of the rotor (6), preferably that at least a paddle (8) with its surface is directed inclined to the longitudinal axis (L₆) of the rotor (6).

5. The device (1) according to any one of claims 2 to 4, **characterized in that** the separating walls (10.2) between the chambers (K₂) of the second type and the downstream chambers (K₁) of the first type at least in the area of their lower border (16) and adjacent to the bottom section (14) of the container (2) each comprise a plurality of through-holes (36), with the through-holes (36) ensuring a fluid connection between the chambers (K), and with their diameter (36) are selected smaller than the particles of the bulk material, with the container (2) adjacent to its outlet port (A) comprising a liquid inlet (38) and adjacent to its filling port (E) a liquid outlet (40), preferably that the container (2) with its longitudinal axis (L) is inclined by an angle (α) with respect to the horizontal (H) in such a way that the outlet port (A) is positioned in vertical direction by a path (s) above the liquid outlet (40).

6. A device (1) for treatment of especially small-sized bulk material, comprising
an elongate container (2) with a filling port (E) and an outlet port (A), with a transport path (T) for conveying the bulk material being configured between the filling port (E) and the outlet port (A) within the container (2), with at least a rotor (6) being arranged in the container (2) along its longitudinal axis (L) to which rotor at least a paddle (8) and/or a blade is attached in order to convey the bulk material in a predetermined direction of the transport path (T), and
with the container (2) being positioned stationary, with a plurality of adjacent chambers (K) connected with each other being configured in the container (2) along ist longitudinal axis (L), with the chambers (K₁; K₂) being configured alternatingly with respect to a passage to an adjacent chamber (K₂; K₁) in each case, and thus the transport path (T) for conveyance of bulk material extending in a meandering pattern, **characterized in**
**that** the container (2) with its longitudinal axis (L) is arranged vertically and the bulk material can be conveyed through the container vertically from top to bottom, with the separating walls (10') between the chambers (K) being spaced apart alternatingly with their left and/or right border from an inner wall (30) of the container (2) so that the passages between adjacent chambers (K) are formed by a distance between the left and/or right border of a respective separating wall (10') and the inner wall (30) of the container (2), preferably that the rotor (6) is arranged approximately in a center area of the separating walls (10').

7. The device (1') according to claim 6, **characterized in that** on the rotor (6) in the respective chambers (K) at least a paddle (8) and/or at least a blade is attached in order to convey the bulk material in the direction of the passage to the next downstream chamber, preferably that the bulk material in the respective chambers (K) by means of compressed air is conveyed in the direction of the passages formed in each case between the adjacent chambers (K), more preferably that compressed air nozzles (32) are attached on the separating walls (10') which are directed towards the corresponding passage holes with their outlet port.

8. The device (1; 1') according to any one of claims 1 to 7, **characterized in that** at least a heating device (34) is provided by means of which an interior space of the container (2) can be temperature-controlled, and/or that the container (2) can be placed under vacuum, and can be sealed against the environment for this purpose.

9. A method for treatment of especially small-sized bulk material within an elongate container (2) in which a transport path (T) for conveying the bulk material is formed,
with the container (2) being positioned stationary and the bulk material being conveyed through the container (2) along the transport path (T) in a meandering pattern,
with the container (2) with its longitudinal axis (L) being arranged horizontally,
**characterized in**
**that** the transport path (T) for conveying the bulk material extends at least in a vertical plane so that during conveying of the bulk material in a meandering pattern along the transport path (T), namely alternatingly in every second chamber within the container, the bulk material is conveyed from the bottom towards the top, and particles of the bulk material along the transport path (T) relative to adjacent particles and in particular particles located above, are set in motion in the process, and thus mixing and cleaning is achieved for the bulk material, and
**that** in the container (2) along its longitudinal axis (L) a plurality of adjacent chambers (K) connected with each other is configured, with the chambers (K) being configured alternatingly with respect to a passage to an adjacent chamber (K) in each case, and thus the bulk material being conveyed along the transport path (T) in a meandering pattern.

10. The method according to claim 9, **characterized in that** the bulk material in the container (2) is conveyed along the transport path (T) by a rotor (6) in a predetermined direction, with the rotor (6) passing through separating walls (10), which are provided between the respective chambers (K), preferably that a plurality of paddles (8) and/or blades is attached on the rotor (6), with which the bulk material is conveyed in a predetermined direction of the transport path (T), more preferably that an angular position of the paddles (8) or the blades relative to the rotor (6) is adjustable, more preferably that a speed of the rotor (6) is controllable in a variable manner in order to adjust a throughput of the bulk material through the container (2) to a predetermined value.

11. The method according to claim 10, **characterized in that** the passages from the chambers (K) to the adjacent chambers (K) in each case are variable in order to adjust a throughput of the bulk material through the container (2) to a predetermined value.

12. The method according to any one of claims 9 to 11, **characterized in that** a liquid, preferably water or sodium hydroxide solution, is introduced into the container (2) in order that the bulk material in the container (2) is mixed with the liquid, preferably that the quantity of liquid, which is introduced into the container (2), is selected such that the particles of the bulk material on their surface are entirely liquid-wetted.

13. The method according to any one of claims 9 to 12, **characterized in that** interior space of the container (2) is preheated to a predetermined temperature and/or the liquid, which is introduced into the container (2), comprises a predetermined temperature.

14. The method according to any one of claims 9 to 13, **characterized in that** the treatment of bulk material within the container (2) is made under vacuum.

15. The method according to any one of claims 9 to 14 which is carried out with a device (1; 1') according to any one of claims 1 to 8.

## Revendications

1. Dispositif (1) pour le traitement d'un produit en vrac, en particulier en petits morceaux, comportant
un récipient oblong (2) avec un orifice de remplissage (E) et un orifice de sortie (A), une voie de transport (T) pour transporter le produit en vrac étant formée entre l'orifice de remplissage (E) et l'orifice de sortie (A) dans le récipient (2),
au moins un rotor (6) étant disposé dans le récipient (2) le long de son axe longitudinal (L) auquel au moins une palette (8) et/ou une aube est montée pour transporter le produit en vrac dans une direction prédéterminée de la voie de transport (T), et
le récipient (2) étant placé de manière stationnaire, une pluralité de chambres (K) adjacentes et liées entre eux étant formée dans le récipient (2) le long de son axe longitudinal (L), les chambres (K₁; K₂) étant formée en alternance relatif à un passage à une chambre (K₁; K₂) adjacente, et ainsi la voie de transport (T) pour transporter le produit en vrac s'étendant en méandres,
le récipient (2) étant disposé de manière horizontale avec son axe longitudinal (L),
**caractérisé en ce**
**que** la voie de transport (T) pour transporter le produit en vrac s'étend en méandres au moins dans un plan vertical.

2. Dispositif (1) selon la revendication 1, **caractérisé en ce que** le rotor (6) est disposé adjacent à une zone de fond (14) du récipient (2), les chambres (K) dans le récipient (2) étant formées en alternance sous forme de chambres (K₁) d'un premier type et des chambres (K₂) d'un deuxième type, les parois de séparation (10.1) dans une chambre (K₁) du premier type adjacente à une chambre (K₂) en aval du deuxième type avec leur bord inférieur (12) étant espacées de la zone de fond (14) du récipient (2) par un écart (S), les parois de séparation (10.2) dans une chambre (K₂) du deuxième type adjacente à une chambre (K₁) en aval du premier type avec leur bord inférieur (16) fermant de manière étanche avec le zone de fond (14) du récipient (2), et avec leur bord supérieur (17) comportant une hauteur verticale inférieure aux parois de séparation (10.1) adjacentes de manière que les passages entre des chambres (K₁; K₂) adjacentes sont formés soit par l'écart (S) entre le bord inférieur (12) d'une paroi de séparation (10.1) et la zone de fond (14) du récipient (2) soit au-dessus du bord supérieur (17) d'une paroi de séparation (10.2).

3. Dispositif (1) selon la revendication 2, **caractérisé en ce que** dans une chambre (K₁) respective du premier type liée avec une chambre (K₂) en aval du deuxième type par l'écart (S) entre le bord inférieur (12) d'une paroi de séparation (10.1) et la zone de fond (14) du récipient (2), une pluralité de palettes (8) et/ou d'aubes est montée au rotor (6) par lesquels le produit en vrac est transporté dans la direction de l'écart (S), au moins une palette (8) avec sa surface étant orientée obliquement à l'axe longitudinal (L₆) du rotor (6).

4. Dispositif (1) selon la revendication 2 ou 3, **caractérisé en ce que** dans une chambre (K₂) du deuxième type liée avec une chambre (K₁) en aval du premier type par le bord supérieur (17) d'une paroi de séparation (10.2), une pluralité de palettes (8) et/ou d'aubes est montée au rotor (6) à travers lesquels le produit en vrac est transporté dans la direction verticale au bord supérieur (17) d'une paroi de séparation (10.2), au moins une palette (8) avec sa surface étant orientée parallèlement à l'axe longitudinal (L₆) du rotor (6), de préférence qu'au moins une palette (8) avec sa surface est orientée obliquement à l'axe longitudinal (L₆) du rotor (6).

5. Dispositif (1) selon l'une quelconque des revendications 2 à 4, **caractérisé en ce que** les parois de séparation (10.2) entre les chambres (K₂) du deuxième type et les chambres (K₁) en aval du premier type au moins dans la zone de leur bord inférieur (16) et adjacentes à la zone de fond (14) du récipient (2) chacune comportent une pluralité des trous débouchants (36), les trous débouchants (36) assurant une communication fluidique entre les chambres (K) et avec leur diamètre sont choisis inférieur aux particules du produit en vrac, le récipient (2) adjacent à son orifice de sortie (A) comportant une entrée de liquide (38) et adjacent à son orifice de remplissage (E) une sortie de liquide (40), de préférence que le récipient (2) avec son axe longitudinal (L) est incliné par un angle (α) relatif à la ligne horizontale de manière à ce que l'orifice de sortie (A) se trouve en direction verticale par une voie (s) au-dessus de la sortie de liquide (40).

6. Dispositif (1) pour le traitement d'un produit en vrac, en particulier en petits morceaux, comportant
un récipient oblong (2) avec un orifice de remplissage (E) et un orifice de sortie (A), une voie de transport (T) pour transporter le produit en vrac étant formée entre l'orifice de remplissage (E) et l'orifice de sortie (A) dans le récipient (2),
au moins un rotor (6) étant disposé dans le récipient (2) le long de son axe longitudinal (L) auquel au moins une palette (8) et/ou une aube est montée pour transporter le produit en vrac dans une direction prédéterminée de la voie de transport (T), et
le récipient (2) étant placé de manière stationnaire, une pluralité de chambres (K) adjacentes et liées entre eux étant formée dans le récipient (2) le long de son axe longitudinal (L), les chambres (K₁; K₂) étant formée en alternance relatif à un passage à une chambre (K₁; K₂) adjacente, et ainsi la voie de transport (T) pour transporter le produit en vrac s'étendant en méandres,
**caractérisé en ce**
**que** le récipient (2) avec son axe longitudinal (L) est disposé de manière vertical et le produit en vrac peut être transporté ainsi verticalement de haut en bas à travers le récipient, les parois de séparation (10') entre les chambres (K) étant espacées en alternance avec leur bord gauche et/ou droit de la paroi intérieure (30) du récipient (2) de manière à ce que les passages entre des chambres (K) adjacentes soient formées par une distance entre le bord gauche et/ou le bord droit d'une paroi de séparation (10') respective et la paroi intérieure (30) du récipient (2), de préférence que le rotor (6) soit disposé environ dans une zone centrale des parois de séparation (10').

7. Dispositif (1') selon la revendication 6, **caractérisé en ce qu'**au rotor (6) dans les chambres respectives (K) au moins une palette (8) et/ou une aube est montée pour transporter le produit en vrac dans la direction du passage à la chambre prochaine en aval, de préférence, que le produit en vrac dans les chambres respectives (K) est transporté avec de l'air comprimé dans la direction des passages formés entre les chambres adjacentes (K), plus préférablement, que des buses d'air comprimé (32) sont montées aux parois de séparation (10') qui sont orientées dans la direction des ouvertures de passage correspondantes avec leur ouverture de sortie.

8. Dispositif (1; 1') selon l'une quelconque des revendications 1 à 7, **caractérisé en ce qu'**au moins un dispositif chauffant (34) est prévu au moyen duquel un intérieur du récipient (2) est tempérable, et/ou que le récipient (2) peut être placé sous vide, et peut être rendu étanche contre l'environnement à cette fin.

9. Procédé pour le traitement d'un produit en vrac, en particulier en petits morceaux dans un récipient oblong (2) dans lequel une voie de transport (T) pour transporter le produit en vrac est formé,
le récipient (2) étant placé de manière stationnaire et le produit en vrac étant transporté à travers le récipient (2) le long de la voie de transport (T) en méandres,
le récipient (2) étant disposé de manière horizontale avec son axe longitudinal (L),
**caractérisé en ce**
**que** la voie de transport (T) pour transporter le produit en vrac s'étend au moins dans un plan vertical de manière que pendant le transport en méandres du produit en vrac le long de la voie de transport (T), à savoir en alternance dans chaque deuxième chambre dans le récipient, le produit en vrac est transporté de bas en haut et, en agissant ainsi, des particules du produit en vrac le long de la voie de transport (T) sont mises en mouvement relatives aux particules adjacentes and surtout des particules disposées au-dessus, et ainsi un mélange et un nettoyage est obtenu pour le produit en vrac, et
**que** dans le récipient (2) une pluralité des chambres (K) adjacentes et liées entre eux est formée le long de son axe longitudinal (L), les chambres (K) étant formée en alternance relatif à un passage à une chambre (K) adjacente, et ainsi le produit en vrac étant transporté le long de la voie de transport (T) en méandres.

10. Procédé selon la revendication 9, **caractérisé en ce que** le produit en vrac dans le récipient (2) le long de la voie de transport (T) est transporté par un rotor (6) dans une direction prédéterminée, le rotor (6) traversant des parois de séparation (10) prévues entre des chambres respectives (K), de préférence, qu'au rotor (6) une pluralité de palettes (8) et/ou d'aubes est montée avec lesquels le produit en vrac est transporté dans un direction prédéterminée de la voie de transport (T), plus préférablement qu'une position angulaire des palettes (8) ou des aubes est réglable relative au rotor (6), plus préférablement, qu'un nombre de tours du rotor (6) est contrôlable de manière variable pour régler un débit du produit en vrac à travers le récipient (2) à une valeur prédéterminée.

11. Procédé selon la revendication 10, **caractérisé en ce que** les passages des chambres (K) aux chambres adjacentes (K) sont variables pour régler un débit du produit en vrac à travers le récipient (2) à une valeur prédéterminée.

12. Procédé selon l'une quelconque des revendications 9 à 11, **caractérisé en ce qu'**un liquide, de préférence de l'eau ou de la soude caustique, est introduit dans le récipient (2) de manière que le produit en vrac dans le récipient (2) est mélangé avec le liquide, de préférence, que la quantité de liquide introduite dans le récipient (2) est choisie de sorte que les particules du produit en vrac à leur surface soient entièrement mouillés par le liquide.

13. Procédé selon l'une quelconque des revendications 9 à 12, **caractérisé en ce que** l'intérieur du récipient (2) est chauffé à une température prédéterminée et/ou le liquide qui est introduit dans le récipient (2) a une température prédéterminée.

14. Procédé selon l'une quelconque des revendications 9 à 13, **caractérisé en ce que** le traitement d'un produit en vrac dans le récipient (2) s'effectue sous vide.

15. Procédé selon l'une quelconque des revendications 9 à 14 qui est effectué avec un dispositif (1; 1') selon l'une quelconque des revendications 1 à 8.
